(19) Europäisches Patentamt

European Patent Office

Office européen des brevets

(11) **EP 1 523 090 A2**

(12) **EUROPÄISCHE PATENTANMELDUNG**

(43) Veröffentlichungstag:
**13.04.2005 Patentblatt 2005/15**

(51) Int Cl.⁷: **H02P 5/40**

(21) Anmeldenummer: **04023471.8**

(22) Anmeldetag: **01.10.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **08.10.2003 DE 10346711**

(71) Anmelder: **MINEBEA CO., LTD.**
**Kitasaku-gun, Nagano-ken (JP)**

(72) Erfinder:
• **Neumann, Rudolf**
**78549 Spaichingen (DE)**
• **Berbatov, Nikolay**
**86150 Augsburg (DE)**

(74) Vertreter: **Riebling, Peter, Dr.-Ing.**
**Patentanwalt,**
**Postfach 31 60**
**88113 Lindau/B. (DE)**

(54) **Verfahren zur Kommutierung eines bürstenlosen Gleichstrommotors**

(57) Die Erfindung betrifft ein Verfahren zur Kommutierung eines bürstenlosen Gleichstrommotors mit mindestens einer Motorwicklung, bei dem die Position des Rotors bezogen auf den Stator ermittelt und daraus ein Kommutierungssignal erzeugt wird, und die Motorwicklung in Abhängigkeit vom Kommutierungssignal mit einem voreingestellten Kommutierungswinkel bestromt wird. Je nach Bauweise und Bestromung des Motors ist erfindungsgemäß vorgesehen, dass beim Auftreten eines Kommutierungssignals die Polarität des Wicklungsstroms erfasst wird, und der Kommutierungswinkel in Abhängigkeit von der erfassten Polarität des Wicklungsstroms derart geändert wird, dass der Wicklungsstrom beim Auftreten eines Kommutierungssignals im wesentlichen Null ist oder einen Nulldurchgang hat, oder, dass beim Auftreten eines Kommutierungssignals der Betrag der Wicklungsströme erfasst wird, und der Kommutierungswinkel in Abhängigkeit von der erfassten Polarität des Wicklungsstroms derart geändert wird, dass die aus den Wicklungsströmen berechnete Gesamterregung der aktuellen Phase beim Auftreten eines Kommutierungssignals im wesentlichen Null ist.

Fig. 1

**Beschreibung**

Gebiet der Erfindung

Die Erfindung betrifft Verfahren zur Kommutierung eines bürstenlosen Gleichstrommotors nach dem Oberbegriff der unabhängigen Patentansprüche

Beschreibung des Standes der Technik

Bei einem bürstenlosen Gleichstrommotor wird der Motorstrom in bestimmten Rotorlagen durch elektronische Schaltelemente, z.B. Transistoren, kommutiert. Bei einem einsträngigen Motor passiert dies zweimal je elektrische Umdrehung, wobei die an der einzigen Wicklung angelegte Spannung wechselweise umgepolt wird. Bei einem dreisträngigen Motor erfolgt die Kommutierung alle 120° (elektrisch). Damit dieser Kommutierungsvorgang zum richtigen Zeitpunkt erfolgt, muss die aktuelle Rotorlage bekannt sein.

Die übliche Methode zur Erfassung der Rotorlage bei diesen Motoren basiert auf Hallsensoren. Diese Bauelemente werden in der Regel in der/den neutralen Zone(n) des Ankerumfangs angeordnet und erfassen das vom permanentmagnetischen Rotor erzeugte magnetische Feld. Als neutrale Zonen werden jene Stellen des Ankerumfangs bezeichnet, bei denen die Normalkomponenten der Induktion Null sind, also jeweils die Nutmitte des Stators. Erreicht der Rotor eine neutrale Zone, die jeweils auch der mechanischen Kommutierungsposition entspricht, erzeugt der Hallsensor ein Kommutierungssignal.

Da die Motorwicklung eine relativ große Induktivität aufweist, erreicht der Motorstrom nicht sofort nach dem Einschalten sein Maximum, sondern eilt der angelegten Motorspannung nach, das heißt er wird um eine gewisse Zeit verzögert. Um diese Verzögerung zu kompensieren, wird eine sogenannte Vorkommutierung praktiziert. Das heißt, der Kommutierungsvorgang wird gestartet, noch bevor der Rotor die eigentliche Kommutierungsposition erreicht hat.

Zur Realisierung einer Vorkommutierung gibt es im wesentlichen zwei Möglichkeiten. Eine Möglichkeit besteht darin, den Hallsensor anstatt in der neutralen Zone in Drehrichtung des Rotors gesehen geringfügig vor der neutralen Zone zu platzieren. Dadurch erzeugt der Hall-Sensor ein Kommutierungssignal noch bevor der Rotor seine eigentliche Kommutierungsposition erreicht. Diese Lösung eignet sich für Motoren, die nur in einer Drehrichtung arbeiten, z. B. Motoren zum Antrieb von Lüftern. Der Nachteil dieser Methode ist, dass hier das durch den Statorstrom erzeugte Magnetfeld das Messsignal des Hallsensors beeinflussen kann, was unter anderem zu Anlaufschwierigkeiten des Motors führen kann.

Eine andere Methode zur Vorkommutierung nutzt die Tatsache, dass unter Last laufende Motoren, insbesondere auch bei Lüfteranwendungen, oft ein hohes Trägheitsmoment aufweisen. Dadurch ändert sich die Betriebsdrehzahl bei einer Änderung der Betriebsbedingungen nur relativ langsam. Diese Trägheit wird bei der Kommutierung ausgenutzt, indem die Zeit zwischen zwei Polaritätswechseln des Hallsignals, also die Zeit zwischen zwei aufeinanderfolgenden Kommutierungssignalen, gemessen wird. Wenn man davon ausgeht, dass die gemessene Zeit zwischen den nächsten zwei Polaritätswechseln konstant bleibt, kann der Zeitpunkt der Vorkommutierung aus der gemessenen Zeit berechnet und mit einem Zeitgeber gemessen werden. Dieser Zeitgeber kann entweder hardwaremäßig, z.B. mit einer Zähler-Zeitgeber-Einheit eines Mikrocontrollers, oder softwaremäßig realisiert werden. Der Vorteil dieser Methode ist, dass der Hallsensor in der neutralen Zone platziert werden kann, wo aus Symmetriegründen die Beeinflussung des Sensors durch den Wicklungsstrom minimal ist. Der Nachteil ist die geringfügig höhere Anforderung an die Steuerelektronik.

Es gibt auch so genannte sensorlose Motoren, die keine separaten Lagesensoren aufweisen, das heißt die Lage des Rotors wird hier ohne Hallsensoren bzw. generell ohne spezielle Lagesensoren bestimmt. Bei solchen sensorlosen Motoren werden die Motorwicklungen als Sensoren genutzt. Hierbei wird die Rotorlage aus elektrisch messbaren Größen (Motorspannung und/oder Motorstrom) abgeleitet. Diese Methode ist besonders bei Motoren mit externer Kommutierungselektronik vorteilhaft, da hier nicht nur die Sensoren und gegebenenfalls ihre Halter im Motor, sondern auch die Sensorleitungen zur externen Elektronik und die entsprechenden Steckverbindungen entfallen können.

Unabhängig davon wie die Rotorlage erfasst und die Vorkommutierung realisiert wird, bleibt die Frage, wie groß der Winkel der Vorkommutierung sein soll. Durch Ändern dieses Winkels kann sowohl die Drehmoment-Drehzahl-Kennlinie des Motors als auch dessen Wirkungsgrad beeinflusst werden. Falls der Kommutierungswinkel mit einer Deplatzierung der Hallsensoren realisiert wird, kann der Vorkommutierungswinkel nur für einen bestimmten Arbeitspunkt optimiert werden, da der Winkel selber durch die mechanische Winkellage der Hall-Sensoren festgelegt wird. Wird jedoch die Vorkommutierung softwaremäßig realisiert, kann der Kommutierungswinkel an den gewünschten Arbeitspunkt angepasst werden.

Offenbarung der Erfindung

Es ist die Aufgabe der Erfindung, Verfahren zur Kommutierung eines bürstenlosen Gleichstrommotors anzugeben, die eine automatischen Optimierung des Kommutierungswinkels durch die Motorsteuerung ermöglichen. Die Optimierung des Kommutierungswinkels soll kostengünstig und mit wenig zusätzlichem technischen Aufwand durchführbar sein.

Diese Aufgabe wird erfindungsgemäß durch die Merkmale der unabhängigen Patentansprüche gelöst.

Vorteilhafte Ausgestaltungen und Merkmale der Erfindung sind in den abhängigen Ansprüchen angegeben.

Der optimale Kommutierungswinkel ist drehzahl- und belastungsabhängig. Die Erfindung zeigt eine einfache Lösung auf, wie die Kommutierungselektronik der Motorsteuerung den arbeitspunktabhängigen optimalen Kommutierungswinkel ermitteln kann. Es wurde erkannt, dass der optimale Stromverlauf in der Motorwicklung dann erreicht wird, wenn der Zeitpunkt des Nulldurchgangs des Wicklungsstroms mit dem Zeitpunkt des Auftretens des Kommutierungssignals übereinstimmt, oder, wenn die aus den Wicklungsströmen berechnete Gesamterregung der aktuellen Phase zum Zeitpunkt des Kommutierungssignals im wesentlichen Null ist. Mit dem Ausdruck "Im wesentlichen Null" wird ein ausreichend kleiner Wert der Wicklungs- bzw. Erregerströme bezeichnet, der nicht um mehr als einen vorher definierten Betrag von Null abweicht.

In einer ersten Ausgestaltung der Erfindung, die insbesondere für Motoren mit bipolarer Bestromung geeignet ist, ist vorgesehen, dass die Polarität des Wicklungsstromes ausgewertet wird. Der Zeitpunkt des Nulldurchgangs des Wicklungsstroms wird mit dem Zeitpunkt des Kommutierungssignals verglichen. Liegt der Zeitpunkt des Nulldurchgangs des Wicklungsstroms vor dem Zeitpunkt des Kommutierungssignals, dann ist der Kommutierungswinkel zu groß. Die Motorsteuerung soll ihn deshalb reduzieren. Liegt der Zeitpunkt des Nulldurchgangs nach dem Zeitpunkt des Kommutierungssignals, dann ist der Kommutierungswinkel zu klein. Die Motorsteuerung soll ihn deshalb erhöhen. Mit diesem Verfahren kann die Regelung automatisch den optimalen Kommutierungswinkel finden, bei dem der Nulldurchgang des Wicklungsstromes und das Kommutierungssignal zeitlich zusammenfallen.

In einer zweiten Ausgestaltung der Erfindung, insbesondere geeignet für mehrsträngige Motoren mit unipolarer Bestromung, ist es vorgesehen, dass beim Auftreten eines Kommutierungssignals der Betrag der Wicklungsströme erfasst wird, und der Kommutierungswinkel derart geändert wird, dass die aus den Wicklungsströmen berechnete Gesamterregung der aktuellen, d.h. der aktuell bestromten Phase beim Auftreten eines Kommutierungssignals im wesentlichen Null ist.

Der Vorteil der Erfindung ist, dass die Kommutierungselektronik in der Motorsteuerung neben dem Kommutierungssignal, im Falle eines sensorenbehafteten Motors z.B. einem Hallsignal, zusätzlich nur die Polarität und/oder den Betrag des Wicklungsstromes auszuwerten braucht, um den optimalen Kommutierungswinkel zu bestimmen. Dadurch bleiben die Kosten für die zusätzliche Sensorik gering. Die Regelung kann in vorteilhafter Weise in einem Mikrocontroller der Kommutierungselektronik softwaremäßig realisiert werden.

Kurzbeschreibung der Zeichnungen

Die Erfindung wird nachfolgend anhand von Ausführungsbeispielen mit Bezugnahme auf die Zeichnungsfiguren näher erläutert.

Figur 1 zeigt ein vereinfachtes Blockschaltbild eines einsträngigen, einphasigen und bipolaren Gleichstrommotors.

Figur 2 zeigt das Ausgangssignal des Hallsensors (20), den Motorstrom (21) und den Wicklungsstrom (22) eines Motors nach Figur 1 bei einer bestimmten Drehzahl und einem Kommutierungswinkel von 20° (elektrisch).

Figur 3 zeigt das Ausgangssignal des Hallsensors (30), den Motorstrom (31) und den Wicklungsstrom (32) eines Motors nach Figur 1 bei einer bestimmten Drehzahl und einem Kommutierungswinkel von 10° (elektrisch).

Figur 4 zeigt das Ausgangssignal des Hallsensors (40), den Motorstrom (41) und den Wicklungsstrom (42) eines Motors nach Figur 1 bei einer bestimmten Drehzahl und einem Kommutierungswinkel von 6° (elektrisch).

Figur 5 zeigt ein vereinfachtes Blockschaltbild eines zweisträngigen, einphasigen und unipolaren Gleichstrommotors.

Figur 6 zeigt ein vereinfachtes Blockschaltbild eines viersträngigen, zweiphasigen und unipolaren Gleichstrommotors.

Figur 7 zeigt ein vereinfachtes Blockschaltbild eines dreisträngigen, dreiphasigen und unipolaren Gleichstrommotors.

Figur 8 zeigt ein vereinfachtes Blockschaltbild eines dreisträngigen, dreiphasigen und bipolaren Gleichstrommotors.

Beschreibung von bevorzugten Ausführungsbeispielen der Erfindung

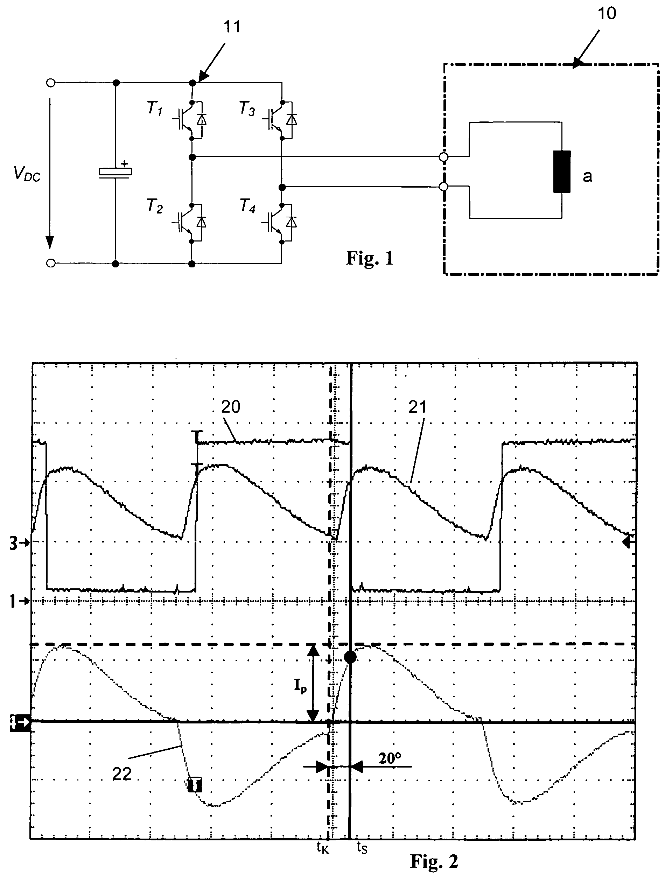

In Figur 1 ist ein vereinfachtes Blockschaltbild eines einsträngigen, bürstenlosen Gleichstrommotors dargestellt. Der Motor umfasst den eigentlichen Motor 10 und die zugehörige Motorsteuerung 11 mit Kommutierungselektronik, die im Motor integriert oder auch extern vorgesehen sein kann. Die einzige Wicklung a des Stators wird bipolar jeweils für einen elektrischen Winkel von 180° bestromt, das heißt jeweils nach 180° wird die Polarität der Speisespannung $V_{DC}$ durch die Transistoren $T_1$ bis $T_4$ der Steuerung 11 umgeschaltet. Derartige einsträngige, bürstenlose Gleichstrommotoren werden zum Beispiel zum Antrieb von Lüftern verwendet.

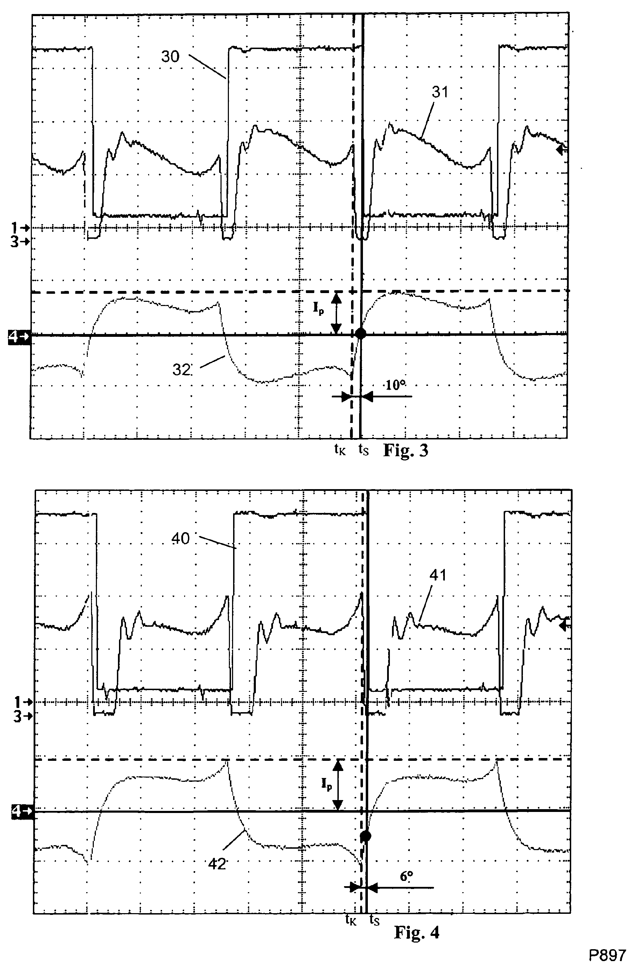

Es wird davon ausgegangen, dass in der Nutmitte des Stators dieses Motors, also in der neutralen Zone, ein Lagesensor z.B. in Form eines Hallsensors angeordnet ist. Der Hallsensor liefert z.B. ein rechteckförmiges Ausgangssignal, das als Kommutierungssignal an einen Eingang eines Mikrocontrollers der Motorsteuerung 11 geführt wird. Entsteht eine Flanke im Kommutierungssignal, wird im Mikrocontroller zum Beispiel ein Interrupt ausgelöst. Mit diesem Interrupt wird normalerweise der Programmablauf für die Kommutierung gestartet. Gemäß der Erfindung wird zu diesem Zeitpunkt zusätzlich die Polarität des bipolaren Wicklungsstromes erfasst. Ist der Wicklungsstrom der positiven Halbwelle bei einem Wechsel des Kommutierungssignals positiv (Figur 2), reduziert die Motorsteuerung den Kommutierungswinkel. Ist der Wicklungsstrom in der positiven Halbwelle bei einem Wechsel des Kommutierungssignals dagegen negativ (Fig. 4), muss der Kommutierungswinkel erhöht werden. Bei einer Auswertung der negativen Halbwelle gelten sinngemäß die gegengesetzten Polaritäten im Wicklungsstrom, das heißt bei einem negativen Wicklungsstrom wird der Kommutierungswinkel reduziert und bei einem positiven Wicklungsstrom erhöht.

Nach dieser Berechnung kann die Motorsteuerung den Zeitpunkt der nächsten Kommutierung berechnen und einen Zeitgeber starten, der in Abhängigkeit des Kommutierungssignals den Zeitpunkt der tatsächlichen Kommutierung bestimmt.

Figur 2 zeigt eine Darstellung einiger Motorparameter eines einsträngigen 4-poligen Außenläufermotors, im einzelnen des Kommutierungssignals 20 (oben), des Motorstromes 21 (Mitte) und des Wicklungsstromes 22 (unten) bei einer bestimmten Drehzahl, z.B. bei 1980 min$^{-1}$. In diesem Beispiel beträgt der Kommutierungswinkel 20° elektrisch, das heißt der Wicklungsstrom 22 wird zum Zeitpunkt $t_K$ 20° vor dem eigentlichen Kommutierungszeitpunkt, der durch eine Flanke des Kommutierungssignals $t_s$ des Hallsensors angezeigt wird, umgeschaltet. Der auftretende Spitzenstrom in der Wicklung ist mit Ip bezeichnet.

Figur 3 zeigt die selben Signale, Kommutierungssignal 30, Motorstrom 31 und Wicklungsstrom 32 des gleichen Motors bei verändertem Kommutierungswinkel von 10° elektrisch. Durch die Änderung des Kommutierungswinkels ändern sich auch die Drehzahl und dadurch die Belastung des Motors. Um diesen Effekt auszugleichen, kann die Motorspannung soweit angepasst werden, dass die ursprüngliche Drehzahl von 1980 min$^{-1}$ wieder erreicht wird. Da der Motor mit einem Lüfterrad belastet wurde, arbeitet der Motor nicht nur mit der gleichen Drehzahl wie bei Figur 2 sondern auch mit dem gleichen Drehmoment. Es ist erkennbar, dass aufgrund des geänderten Kommutierungswinkels von jetzt 10° elektrisch der Spitzenstrom Ip in der Wicklung reduziert wurde. Gleichzeitig sinkt auch die Aufnahmeleistung. Wenn man jedoch den Kommutierungswinkel weiter reduziert, erhöht sich der Spitzenstrom.

Fig. 4 zeigt das Kommutierungssignal 40, den Motorstrom 41 und den Wicklungsstrom 42 im gleichen Arbeitspunkt bei 6° elektrischem Kommutierungswinkel. Hier ist der Spitzenstrom $I_P$ und damit auch die Aufnahmeleistung des Motors höher als beim Beispiel gemäß Figur 3, obwohl die Abgabeleistung konstant gehalten wurde. Das heißt, der Motor arbeitet mit schlechterem Wirkungsgrad. Der Spitzenstrom erhöht sich um ca. 20% gegenüber Figur 3.

Der optimale Betrieb und Arbeitspunkt wird also in diesem Beispiel bei einem Kommutierungswinkel von 10° elektrisch gemäß Figur 3 erreicht.

Erfolgt der Nulldurchgang des Wicklungsstroms 22 zeitlich vor dem Kommutierungssignal 20, wie es in Figur 2 dargestellt ist, ist der Kommutierungswinkel, hier 20° elektrisch, zu groß. Die Motorsteuerung soll ihn deshalb reduzieren. Erfolgt der Nulldurchgang des Wicklungsstroms 42 erst nach dem Kommutierungssignal 40 gemäß Figur 4, ist der Kommutierungswinkel, hier 6° elektrisch, zu klein. Die Motorsteuerung soll ihn deshalb erhöhen. Mit diesem Verfahren kann die Motorsteuerung den optimalen Kommutierungswinkel finden, bei dem der Nulldurchgang des Wicklungsstromes 32 und der Wechsel des Kommutierungssignals 30 zeitlich im wesentlichen zusammenfallen, so wie es in Figur 3 bei einem Kommutierungswinkel von 10° elektrisch dargestellt ist.

Die Erfindung ist nicht nur auf die hier dargestellte Ausführung eines einsträngigen Außenläufermotors mit Hallsensor für Lüfteranwendungen beschränkt, sondern umfasst auch alle im Sinne der Erfindung gleichwirkenden Ausführungen, insbesondere auch mehrsträngige Motoren, sensorlose Motoren sowie Innen- und Außerläufermotoren für verschiedene Anwendungen.

Insbesondere ist die Erfindung auch zur Steuerung von ein- oder mehrsträngigen mit einer unipolaren Stromversorgung betriebenen Motoren geeignet. Hier hat man sogar den Vorteil, dass die Ströme z.B. mit Shunts gemessen werden können, die auf dem gleichen Potential liegen (- Schiene), was die schaltungstechnische Realisation vereinfacht.

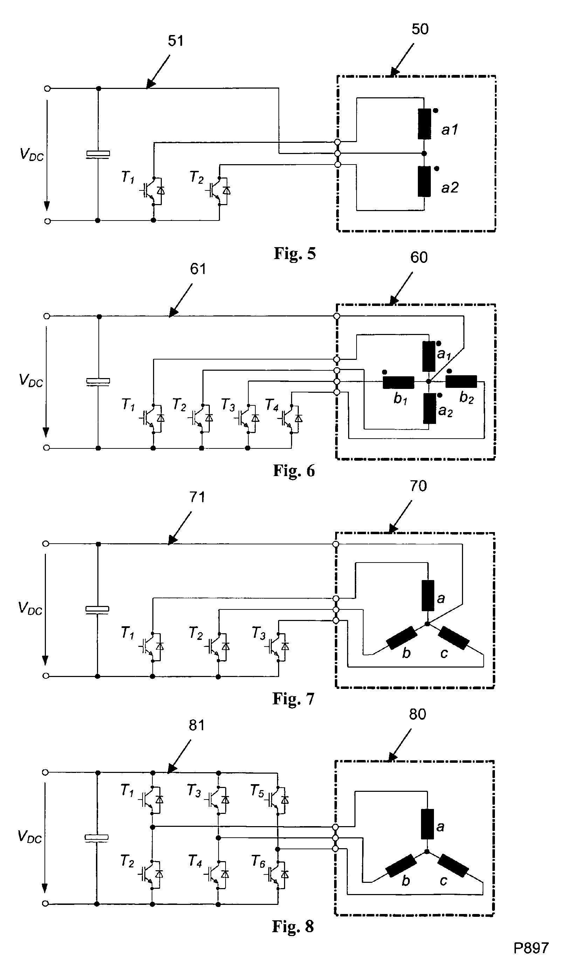

Bei mehrsträngigen Motoren gemäß den Figuren 5 bis 8 ergibt sich die wirksame Erregung aus mehreren Wicklungsströmen. Für die folgenden Überlegungen wird vorausgesetzt, dass alle Wicklungen die gleiche Windungszahl aufweisen. Bei voneinander abweichenden Windungszahlen müssten die Wicklungsströme entsprechend dem Windungsverhältnis mit entsprechenden Faktoren ergänzt werden.

Figur 5 zeigt ein vereinfachtes Blockschaltbild eines zweisträngigen, einphasigen und unipolaren Gleichstrommotors 50 mit Motorsteuerung 51. Dieser Motor 50 enthält zwei Wicklungen a1, a2, die in entgegengesetzte Richtungen Erregung erzeugen. Deshalb kann ein äquivalenter Erregungsstrom $I_E$ definiert werden:

$$I_E = I_{a1} - I_{a2}$$

Das heißt, die Gesamterregung entspricht der Erregung eines einsträngigen Motors, wenn er die gleiche Windungszahl aufweist wie die Wicklungen a1 und a2 (also nicht die Summe), und mit einem Strom $I_E$ bestromt wird.

Dementsprechend soll die Kommutierung erfindungsgemäß so erfolgen, dass das Kommutierungssignal und das Ereignis $I_E = 0$ annähernd gleichzeitig passieren. Bei diesem Motor sind die Wicklungsströme gleich den Strömen der Leistungstransistoren $T_1$ bis $T_4$:

$$I_{a1} = I_{T1} \text{ und } I_{a2} = I_{T2}$$

deshalb können die Ströme der Transistoren entsprechend verwendet werden:

$$I_E = I_{T1} - I_{T2},$$

wobei $I_{T1}$ bzw. $I_{T2}$ der Gesamtstrom am entsprechenden Transistor und an der gegenparallelgeschalteten Freilaufdiode ist, unabhängig davon, ob die Freilaufdiode im Transistor integriert ist, wie es bei MOSFETs üblich ist, oder ob sie separat ausgeführt ist.

Bei dem viersträngigen, unipolaren Motor 60 mit Motorsteuerung 61 nach Figur 6 schließen die Phasen a ($a_1$ und $a_2$) und b ($b_1$ und $b_2$) einen Winkel von 90° elektrisch ein. Deshalb beeinflusst der Strom in der Phase a nicht die Erregung in der Phase b und umgekehrt: Für die Erregungsströme $I_{Ea}$ bzw. $I_{Eb}$ der Phasen a bzw. b gilt:

$$I_{Ea} = I_{a1} - I_{a2} = I_{T1} - I_{T2}$$

$$I_{Eb} = I_{b1} - I_{b2} = I_{T3} - I_{T4}$$

Für die Optimierung des Kommutierungswinkels gilt daher abwechselnd eine der folgenden Bedingungen der Kommutierungsreihenfolge entsprechend:

$$I_{Ea} = 0 \text{ bzw.}$$

$$I_{Eb} = 0$$

Dementsprechend muss auch hier die Kommutierung erfindungsgemäß so erfolgen, dass das Kommutierungssignal und das Ereignis $I_{Ea} = 0$ bzw. $I_{Eb} = 0$ annähernd gleichzeitig passieren.

In Figur 7 ist ein vereinfachtes Schaltbild eines dreisträngigen unipolaren Motors 70 mit entsprechender Motorsteuerung 71 dargestellt. Es sind drei Phasen a, b und c vorhanden, die einen Winkel von 120° elektrisch einschließen. Da der Wert cos 120° = -0,5 beträgt, wirken zum Beispiel die Phasenströme in den Phasen b und c mit dem Faktor -0,5 auf die Erregung in der Phase a. Somit ergibt sich:

$$I_{Ea} = I_a - 0{,}5(I_b + I_c)$$

Das gleiche gilt selbstverständlich auch für die anderen Phasen:

$$I_{Eb} = I_b - 0{,}5 (I_c + I_a)$$

$$I_{Ec} = I_c - 0{,}5 (I_a + I_b)$$

Dementsprechend gelten für die Ermittlung eines optimalen Kommutierungswinkels die Bedingungen, dass beim Auftreten eines Kommutierungssignals die Gesamterregung der aktuellen Phase jeweils im wesentlichen Null sein müssen:

$$I_{Ea} = 0 \text{ bzw. } I_{Eb} = 0 \text{ bzw. } I_{Ec} = 0.$$

Zum Beispiel, wenn bei der Kommutierung der Motorstrom in der Phase a abgeschaltet werden soll, gilt die Bedingung $I_{Ea} = 0$.
Da jeder Phasenstrom durch einen entsprechenden Leistungsschalter (= Transistor + Freilaufdiode) fließt, kann der Strom auch am Schalter gemessen werden.
Zum Beispiel für die Phase a:

$$I_{Ea} = I_{T1} - 0{,}5 (I_{T2} + I_{T3})$$

Beim dreisträngigen bipolaren Motor 80 nach Figur 8 gilt grundsätzlich die im Zusammenhang mit dem Motor gemäß Figur 7 aufgestellte Gleichung:

$$I_{Ea} = I_a - 0{,}5 (I_b + I_c)$$

Da aber hier der Sternpunkt nicht ausgeführt ist, gilt zusätzlich:

$$I_a + I_b + I_c = 0$$

Deshalb kann die folgende Gleichung für beliebige $\lambda$-Werte verwendet werden:

$$I_{Ea} = I_{Ea} + 0 = I_{Ea} + \lambda (I_a + I_b + I_c) = I_a - 0{,}5 (I_b + I_c) + \lambda (I_a + I_b + I_c)$$

Für $\lambda = 0{,}5$ ergibt sich zum Beispiel folgendes:

$$I_{Ea} = 1{,}5 \, I_a$$

Das heißt, hier kann auch die Bedingung $I_a = 0$ zur Festlegung des Kommutierungswinkels verwendet werden.
Die Voraussetzung für die Anwendung des erfindungsgemäßen Verfahrens bei den Beispielen gemäß den Figuren 1 und 8 ist, dass die Elektronik in der Motorsteuerung den Nulldurchgang des Phasenstroms erkennt. Das geht allerdings auch ohne den Strom direkt messen zu müssen.
Bei einem einsträngigen bipolaren Motor nach Figur 1 leiten zum Beispiel die Schalter $T_1$ und $T_4$. Nach der Kommutierung wird der Strom umgeschaltet, so dass die Schalten $T_3$ und $T_2$ durchgeschaltet werden. Wenn $T_1$ und $T_4$ abgeschaltet werden, schalten zunächst die Freilaufdioden von $T_2$ und $T_3$ ein. Erst wenn der Strom seine Polarität geändert hat, leiten die Transistoren $T_2$ und $T_3$ tatsächlich. Wenn die Freilaufdiode leitet, ist das elektrische Potential der Wicklungsleitung um ca. -0,7 V negativer als das Potential der negativen Zwischenkreisschiene. Wenn der Transistor leitet, ist das Potential wegen des Spannungsabfalls am Transistor geringfügig positiver als das Potential der negativen Schiene. Deshalb kann man in vorteilhafter Weise und kostensparend statt den Wicklungsstrom den Spannungsabfall am Schalter erfassen. Das gleiche gilt auch dreisträngige bipolare Motoren gemäß Figur 8.

**Liste der Bezugszeichen**

| | |
|---|---|
| 10 | Motor (einsträngig) |
| 11 | Motorsteuerung |

| | |
|---|---|
| 20 | Kommutierungssignal |
| 21 | Motorstrom |
| 22 | Wicklungsstrom |

| | |
|---|---|
| 30 | Kommutierungssignal |
| 31 | Motorstrom |
| 32 | Wicklungsstrom |

| | |
|---|---|
| 40 | Kommutierungssignal |
| 41 | Motorstrom |
| 42 | Wicklungsstrom |

| | |
|---|---|
| 50 | Motor (zweisträngig) |
| 51 | Motorsteuerung |

| | |
|---|---|
| 60 | Motor (viersträngig) |
| 61 | Motorsteuerung |

| | |
|---|---|
| 70 | Motor (dreisträngig) |
| 71 | Motorsteuerung |

| | |
|---|---|
| 80 | Motor (dreisträngig) |
| 81 | Motorsteuerung |

**Patentansprüche**

1. Verfahren zur Kommutierung eines bürstenlosen Gleichstrommotors (10, 11) mit mindestens einer Motorwicklung (a), bei dem die Position des Rotors bezogen auf den Stator ermittelt und daraus ein Kommutierungssignal (20) erzeugt wird, und die Motorwicklung (a) in Abhängigkeit vom Kommutierungssignal mit einem voreingestellten Kommutierungswinkel bestromt wird,
**dadurch gekennzeichnet,**
**dass** beim Auftreten eines Kommutierungssignals (20; 30; 40) die Polarität des Wicklungsstroms (22; 32; 42) erfasst wird, wobei der Kommutierungswinkel in Abhängigkeit von der erfassten Polarität des Wicklungsstroms derart geändert wird, dass der Wicklungsstrom (I) beim Auftreten eines Kommutierungssignals im wesentlichen Null ist oder einen Nulldurchgang hat.

2. Verfahren nach Anspruch 1, **dadurch gekennzeichnet, dass** bei bipolarer Bestromung der Wicklung der Kommutierungswinkel reduziert wird, wenn die Polarität des Wicklungsstroms (22) in der positiven Halbwelle positiv ist, oder die Polarität des Wicklungsstroms (22) in der negativen Halbwelle negativ ist.

3. Verfahren nach Anspruch 1 oder 2, **dadurch gekennzeichnet, dass** bei bipolarer Bestromung der Wicklung der Kommutierungswinkel erhöht wird, falls die Polarität des Wicklungsstroms (42) in der positiven Halbwelle negativ ist, oder die Polarität des Wicklungsstroms (42) in der negativen Halbwelle positiv ist.

4. Verfahren zur Kommutierung eines bürstenlosen Gleichstrommotors mit mindestens zwei Motorwicklungen (a1, a2), bei dem die Position des Rotors bezogen auf den Stator ermittelt und daraus ein Kommutierungssignal (20; 30; 40) erzeugt wird, und die Motorwicklungen in Abhängigkeit vom Kommutierungssignal mit einem voreingestellten Kommutierungswinkel bestromt wird,
**dadurch gekennzeichnet,**
**dass** beim Auftreten eines Kommutierungssignals der Betrag der Wicklungsströme erfasst wird, wobei der Kommutierungswinkel in Abhängigkeit der erfassten Wicklungsströme derart geändert wird, dass die aus den Wicklungsströmen berechnete Gesamterregung ($I_E$) der aktuellen Phase beim Auftreten eines Kommutierungssignals (20; 30; 40) im wesentlichen Null ist.

5. Verfahren nach einem der Ansprüche 1 bis 4, **dadurch gekennzeichnet, dass** der Betrag und / oder die Polarität des Wicklungsstroms durch Messung des Spannungsabfalls am entsprechenden Leistungsschalter erfasst wird.

6. Verfahren nach einem der Ansprüche 1 bis 5, **dadurch gekennzeichnet, dass** die Lage des Rotors mittels einem oder mehreren Lagesensoren erfasst und daraus das Kommutierungssignal (20; 30; 40) generiert wird.

7. Verfahren nach einem der Ansprüche 1 bis 6, **dadurch gekennzeichnet, dass** die Lage des Rotors mit Hilfe von elektrischen messbaren Größen der Wicklung erfasst und daraus das Kommutierungssignal (20; 30; 40) generiert wird.

**Fig. 1**

**Fig. 2**

Fig. 3

Fig. 4

P897

10

Fig. 5

Fig. 6

Fig. 7

Fig. 8

11

P897